# EUROPEAN PATENT APPLICATION

(11) **EP 2 693 671 A1**
(43) Date of publication of application: **05.02.2014**
(21) Application number: 12305932.1
(22) Date of filing: 30.07.2012
(51) Int. Cl.: H04J 14/02

(54) **Method and related apparatus for coherent optical transmission**

(71) Applicant: Alcatel Lucent, 75007 Paris (FR)
(72) Inventor: Lach, Eugen, 71672 Marbach (DE); Leven, Andreas, 74321 Bietigheim-Bissingen (DE)
(74) Representative: Mildner, Volker

(57) **Abstract**

In order to provide allow very fast tuning of an coherent optical receiver, an apparatus for use in optical telecommunications has a coherent optical receiver (TR) with an O/E converter stage (OE1, OE2) adapted to downconvert a received optical signal in frequency using a local oscillator signal, an analog/digital converter stage (ADC) for sampling the O/E converted signal, and a digital processor (CP) for processing the sampled signal to restore a transmitted data signal. The apparatus contains further a wavelength selector (SEL) for selecting from a distribution network (DF) an unmodulated light signal at a configurable wavelength for use as said local oscillator signal.

## Description

### Field of the Invention

The present invention relates to the field of telecommunications and more particularly to a method and related apparatus for coherent optical transmission.

### Background of the Invention

In switched optical networks, network nodes are needed, which can flexibly switch high amounts of high speed data signals between a large number of input and output ports. Today, optical interfaces are commercially available for signal rates of up to 100 Gbit/s. The overall traffic capacity large network nodes can handle today is in the range of up to few terabit per second. Such network nodes are based on high-speed electrical signal switching.

A high capacity switching system, which has a number of I/O subsystems interconnected through a central optical WDM ring driven at a higher rate than the line rate is described in EP2337372A1, which is incorporated by reference herein. The I/O subsystems transmit signals at different wavelengths in an optical burst mode and the signals are broadcasted over the ring to all other subsystems. Tuneable receivers are employed to receive signal bursts coming from different subsystems.

### Summary of the Invention

The present invention provides a method and related system and apparatus that allows very fast tuning of an coherent optical receiver and may be used in an switching system as the aforementioned one.

In particular, an apparatus for use in optical telecommunications has a coherent optical receiver with an O/E converter stage adapted to down-convert a received optical signal in frequency using a local oscillator signal, an analog/digital converter stage for sampling the O/E converted signal, and a digital processor for processing the sampled signal to restore a transmitted data signal. The apparatus contains further a wavelength selector for selecting from a distribution network an unmodulated light signal at a configurable wavelength for use as said local oscillator signal.

### Brief Description of the Drawings

Preferred embodiments of the present invention will now be described with reference to the accompanying drawings in which
- figure 1: shows a system with a number of subsystems interconnected through optical rings;
- figure 2: shows an optical transceiver for use in the system of claim 1; and
- figure 3: shows an implementation for a fast wavelength selector used in the transceiver of figure 2.

### Detailed Description of the Invention

The principles and design of an optical coherent receiver are described in the article "Real-Time Implementation of Digital Signal Processing for Coherent Optical Digital Communication Systems" by A. Leven et al, IEEE Journal of Selected Topics in Quantum Electronics, vol. 16 no. 5, Sept/Oct 2010, pp. 1227-1234, which is incorporated by reference herein.

A coherent optical receiver of the type described there contains a local oscillator (LO) laser, an optical hybrid, a photo-receiver array, an ADC array, a digital signal processor and a data sink, which typically comprises a decoder and a client interface.

For a polarization multiplexed single-carrier PSK or QAM input signal, the 90° optical hybrid mixes the received signal with the signal of the LO laser and a 90° phase-shifted copy of the LO laser signal. The mixing of the signal with the LO reference is performed for each polarization separately. After photo-detection and linear amplification, the signals, i.e. inphase (I) and quadrature (Q) signal components for both orientations of polarization, are converted from analog domain by sampling them with an ADC array. The AD converted signal is then processed by a DSP, which can be implemented in an ASIC or an FPGA. The processing includes in a first step a correction of imperfections of the receiver frontend Then, the accumulated chromatic dispersion of the channel will be compensated for. In a next step, the symbol timing will be recovered. Next, the polarization rotation of the fiber has to be undone. This is typically done in conjunction with equalization for polarization mode dispersion (PMD) and other impairments. Finally, the carrier phase and frequency has to be recovered before a decision on the symbol can be made. The processing order of some of the steps can also be changed. Some of the steps can be omitted for specialized channels.

In a coherent optical receiver, a wavelength channel can be selected from a WDM input signal by tuning the local oscillator signal to the appropriate wavelength. In some applications, the time to tune the receiver to a new wavelength should be very short, e.g. in the nanosecond range. This can be challenging to achieve by tuning a local oscillator laser.

Therefore, in accordance with an embodiment described below, the local oscillator laser is replaced by a distribution network for cw laser light and a wavelength selector that selects the appropriate wavelength from the distribution network for use as local oscillator signal. The distribution network can be fed by a central DWDM wavelength bank of lasers on a fixed grid. As an alternative, decentralized LO lasers can be combined on the distribution network. The distribution network can be an optical bus system like a fiber ring or fiber star or mixture of these.

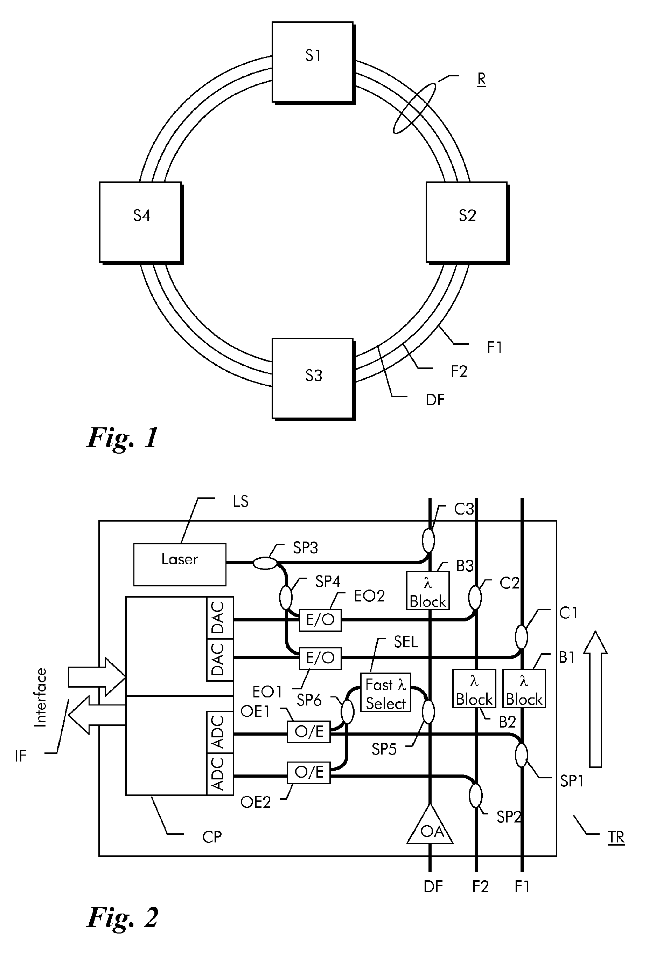

Figure 1 shows four subsystems S1-S4, which are interconnected through a fiber ring. The fiber ring R has two fibers F1, F2 for data signals and a dedicated third fiber DF for distribution of cw laser light for use as LO signal in receivers of the subsystems S1-S4.

The subsystems can be I/O shelves of a large multi-service network node installed in separate racks, which are equipped with line cards for network access such as OTN according to ITU-T G.709, and client access, e.g. 1G Ethernet. The fiber ring R represents a short-range intra-office interconnection between the I/O shelves. Signals on the fiber ring can be transmitted using an internal signal format, different from signal formats used at the Network-Network Interfaces (NNI) and/or User-Network Interfaces (UNI) installed in the I/O shelves.

In a preferred embodiment, the internal signals have an optical packet or burst format transmitted in fixed, synchronous timeslots at different wavelengths. Each I/O shelf transmits at one or more different wavelengths assigned to the particular shelf, and can receive at any wavelength (except its own ones) signals from any other shelf. Optical bursts or packets are delineated by short gaps, during which a receiver can tune to another wavelength for coherent receipt of the next packet or burst that will come in the next timeslot. Crossconnections between any line cards from different shelves can thus be established by properly tuning to the right wavelengths at the right time under the control of a central scheduler. This is described in more detail in EP2337372A1, which is incorporated by reference herein in its entirety.

In order to allow rapid tuning of the receiver from one burst or packet timeslot to the next, the usual LO laser in the coherent receiver is replaced by fast wavelength selective optical switch that selects from the distribution fiber DF the appropriate wavelength.

A transponder TR that can be used for the internal interconnection between subsystems S1-S4 over fiber ring R is shown in figure 2. Transponder TR contains an integrated transponder chip CP, a local laser source LS and a fast wavelength selector SEL.

Transponder chip CP is an integrated circuit such as an ASIC or FPGA, which performs the electrical (pre-)processing of signals to be transmitted as well as received signals. It contains an interface IF, which is coupled to a local bus its I/O shelf, which interconnects the various line cards, a shelf internal switching matrix for shelf-internal crossconnections, and transponder TR for inter-shelf crossconnections.

Signals to be transmitted along ring R come via interface IF from the shelf-internal bus and are digitally pre-processed by transponder chip TR. Transponder chip TR contains two digital/analog converter stages DAC to generate from the preprocessed signals suitable drive signals for modulation onto an optical carrier wavelength coming from cw laser light source LS. Each digital/analog converter stage DAC contains four digital/analog converters for the four signal components, i.e. I and Q signal components of both orientations of polarization.

Each digital/analog converter stage DAC feeds to a corresponding E/O converter EO1, E02. The electrical feeder signals will contain I and Q signal components for the two orientations of polarization. E/O converters E01, E02 contain conventional I/Q modulators, which can be implemented by Mach-Zehnder Interferometers, as well as electrical driver amplifiers. More details on an implementation can be found in the aforementioned article by A. Leven et al..

Laser LS emits a cw laser signal at a constant wavelength assigned to transponder TR. Laser LS can be tunable to allow flexible assignment of wavelengths, or can be designed to emit a single wavelength. A splitter SP3 splits the laser light from laser LS into a fraction that is fed directly via a coupler CP3 to distribution fiber DF, and a fraction that goes to a second splitter SP4, which feeds the two E/O converters with a carrier signal to be modulated.

The modulated optical signals from E/O converters E01, E02 are fed via couplers CP1, CP2 to signal fibers F1, F2, respectively.

In receive direction, transponder TR receives on optical fibers F1 and F2 wavelength multiplexed optical signals. The signals are timeslotted into equidistant optical timeslots with short guard intervals between subsequent timeslots. Each timeslot on each wavelength channel can carry an optical packet or burst signal. Since wavelengths are assigned to different subsystems, different wavelength channels carry packets or bursts from different sources. Selection is made through selection of an appropriate local oscillator wavelength, as will be seen below.

A first splitter SP1 branches off a fraction of the signal received on fiber F1 and feeds it to a first O/E converter OE1 and a second splitter SP2 branches off a fraction of the signal received on fiber F2 and feeds it to a second O/E converter OE2. Moreover, a splitter SP5 branches off a fraction of the combined cw signals from distribution fiber DF and feeds it to a wavelength selector SEL. Wavelength selector SEL can be controlled per timeslot to select from the distribution fiber the wavelength that corresponds to the optical packet or burst to be received from fibers F1 or F2. The output of wavelength selector SEL is supplied via a 3 dB splitter as local oscillator signal to O/E converters OE1, OE2.

O/E converters OE1, OE2 contain a polarization-diversity optical hybrid to down-convert the wavelength channel to be detected in frequency to (or at least close to) the baseband using the local oscillator signal selected from the distribution fiber DF by selector SEL.

O/E converters OE1, OE2 further contain four photo detectors, each, to convert the I and Q components of the two polarization directions to electrical signals, which are then fed to transponder chip CP.

Transponder chip CP contains two analog/digital converter stages ADC for the two O/E converters OE1, OE2. Each analog/digital converter stage ADC can be implemented by an array of four analog/digital converters. Transponder chip CP further contains a signal processor stage which processes the digitized signals and finally performs a decision on the symbol. This is described in more detail in the aforementioned article by A. Leven et al..

Since the local oscillator signal is taken from the distribution fiber DF and comes from the same laser source that was used to create the modulated data signal, the receiver performs what is called self-coherent digital detection.

Wavelength blockers B1 and B2 are arranged on signal fibers F1 and F2 between splitters SP1, SP2 and couplers C1, C2, respectively, which block signals at the wavelength used by laser source LS to avoid re-circulation of data signals along the ring. The ring direction is indicated by a block arrow at the right side of figure 2.

Similarly, a wavelength blocker B3 arranged between splitter SP5 and coupler C3 on the distribution fiber DF blocks LO signals to avoid recirculation. Further, an optical amplifier OA is arranged before splitter SP5 to amplify the distributed LO wavelengths to a level suitable for coherent detection.

It should be understood that the implementation depicted in figure 2 using one distribution fiber DF and two signal fibers F1, F2 is exemplary only. In fact, the number of signal fibers can be arbitrarily chosen between 1 and n, depending on the traffic demand. Transponder can also contain more than one wavelength selectors to support simultaneous receipt of packets from different signal fibers at different wavelengths.

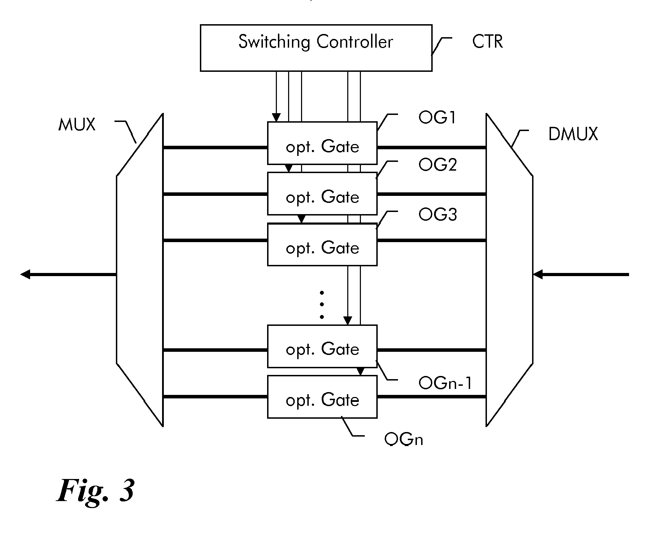

An implementation of a fast wavelength selector SEL used in figure 2 is shown in figure 3. It has a wavelength demultiplexer DMUX that separates the individual LO wavelengths and optical gates OG1-OGn for each LO wavelength. Optical gates OG1-OGn can be individually activated under the control by a switching controller CTR to pass only the selected wavelength. Optical gates OG1-OGn can be implemented for instance through semiconductor optical amplifiers. A wavelength multiplexer MUX such as an optical coupler collects the output of optical gates OG1-OGn.

It is beneficial to chose a polarization maintaining setup for wavelength selector SEL. This can be achieved with polarization maintaining components or by planar integration.

Through the use of a fast wavelength selector and a LO wavelength distribution, the same laser signal that is modulated with the data to be transmitted is used via the distribution network as local oscillator signal, thus resulting in self-coherent detection.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, application specific integrated circuit (ASIC), and field programmable gate array (FPGA). Other hardware, conventional and/or custom, such as read only memory (ROM) for storing software, random access memory (RAM), and non volatile storage may also be included.

## Claims

1. An apparatus for use in optical telecommunications, comprising a coherent optical receiver (TR) with an O/E converter stage (OE1, OE2) adapted to down-convert a received optical signal in frequency using a local oscillator signal, an analog/digital converter stage (ADC) for sampling the O/E converted signal, and a digital processor (CP) for processing the sampled signal to restore a transmitted data signal; said apparatus further comprising a wavelength selector (SEL) for selecting from a distribution network (DF) an unmodulated light signal at a configurable wavelength for use as said local oscillator signal.

2. An apparatus according to claim 1, further comprising an optical transmitter (TR) having a laser light source (LS) emitting at a pre-assigned wavelength and an optical modulator (EO1, E02) coupled to said laser light source (LS); wherein said laser light source (LS) is also coupled to said distribution network (DF) to emit a fraction of unmodulated light into said distribution network (DF).

3. An apparatus according to claim 2; wherein said distribution network (DF) is a distribution fiber ring and wherein said apparatus comprises a wavelength blocker (B3) coupled into said distribution fiber ring (DF) adapted to block light signals at said pre-assigned wavelength to avoid recirculation.

4. An apparatus according to claim 1, wherein said wavelength selector (SEL) comprises a wavelength demultiplexer (DMUX) and a plurality of optical gates (OD1-ODn) to configurably block or pass individual demultiplexed wavelengths.

5. An apparatus according to claim 2; comprising a number of subsystems (S1-S4), said subsystems (S1-S4) being interconnected by a ring network (R), said ring network comprising said distribution network (DF) in the form of a distribution fiber ring and at least one signal fiber ring (F1, F2); wherein each of said subsystems (S1, S4) comprises at least one coherent optical receiver and at least one optical transmitter (TR); wherein each subsystem transmits at a different pre-assigned wavelength; and wherein each of said coherent receivers (TR) is capable of receiving at any wavelength assigned to any other subsystem by selecting an unmodulated light signal of corresponding wavelength from the distribution fiber ring (DF) for use as local oscillator signal.

6. An apparatus according to claim 5 being a multi-shelf network node, wherein said subsystems (S1-S4) are shelves equipped with input/output line cards for external telecommunications signals; wherein said signal fiber ring (F1, F2) is connected to exchange signals to be interconnected between input/output line cards from different shelves (S1, S4).

7. An apparatus according to claim 5, wherein said subsystems (S1-S4) are adapted to exchange over said signal fiber ring (F1, F2) time-slotted signals carrying optical packets or bursts delineated by guard intervals; and wherein said wavelength selectors (SEL) are controllable to switch from one wavelength to another during one of said guard intervals.

8. A method of transmitting optical signals comprising:
- modulating an optical light signal from a laser light source (LS) with a data signal to be transmitted;
- transmitting said modulated optical signal over a signal fiber (F1, F2);
- at a receiver; O/E converting the received optical signal to an electrical signal, comprising down-converting received optical signal in frequency using a local oscillator signal;
- sampling the O/E converted signal using an analog/digital converter stage (DAC);
- processing the sampled signal to restore said data signal;
further comprising:
- distributing a fraction of unmodulated light from said laser light source (LS) over a distribution network (DF);
- selecting from said distribution network (DF) an unmodulated light signal at a configurable wavelength for use as said local oscillator signal.

## Amended claims

### Amended claims in accordance with Rule 137(2) EPC.

**1.** An apparatus for use in optical telecommunications, comprising a coherent optical receiver (TR) with an O/E converter stage (OE1, OE2) adapted to down-convert a received optical signal in frequency using a local oscillator signal, an analog/digital converter stage (ADC) for sampling the O/E converted signal, and a digital processor (CP) for processing the sampled signal to restore a transmitted data signal;
**characterized in that**
said apparatus further comprising a wavelength selector (5EL) for selecting from a distribution network (DF) an unmodulated light signal at a configurable wavelength for use as said local oscillator signal.

**8.** A method of transmitting optical signals comprising:
- modulating an optical light signal from a laser light source (LS) with a data signal to be transmitted;
- transmitting said modulated optical signal over a signal fiber (F1, F2);
- at a receiver; O/E converting the received optical signal to an electrical signal, comprising down-converting received optical signal in frequency using a local oscillator signal;
- sampling the O/E converted signal using an analog/digital converter stage (DAC);
- processing the sampled signal to restore said data signal; **characterized by**
- distributing a fraction of unmodulated light from said laser light source (LS) over a distribution network (DF);
- selecting from said distribution network (DF) an unmodulated light signal at a configurable wavelength for use as said local oscillator signal.
